# EUROPÄISCHE PATENTANMELDUNG

(11) **EP 0 614 837 A1**
(43) Veröffentlichungstag der Anmeldung: **14.09.1994**
(21) Anmeldenummer: 94103795.4
(22) Anmeldetag: 11.03.1994
(51) Int. Cl.: B65G 65/06

(54) **Längsbagger**

(30) Priorität: 11.03.1993 DE 4307764
(71) Anmelder: RIETER-WERKE HÄNDLE GmbH & Co. KG, D-78417 Konstanz (DE)
(72) Erfinder: Restle, Karl, D-78464 Konstanz (DE)
(74) Vertreter: Liesegang, Roland, Dr.-Ing.

(57) **Zusammenfassung**

Ein Längsbagger 2 weist einen schwenkbar über einen Anlenkpunkt 10 an einen Wagen 12 angelenkten Baggerausleger 4 mit daran beweglich angebrachten Baggermitteln auf. Der Wagen 12 ist auf zwei entlang einem Materiallager 28 für zu baggerndes Gut 26 angeordneten Schienen 14,16 verfahrbar. Das Abgabeende des Baggerauslegers 4 liegt oberhalb eines parallel zu den Schienen angeordneten Austragsbandes 32. Die materialseitige Schiene 14 ist dabei quer zur Fahrtrichtung des Wagens 12 gesehen zwischen dem Austragsband 32 und einer das Materiallager 28 seitlich begrenzenden Stützmauer 30 angeordnet.

## Beschreibung

Die Erfindung betrifft einen Längsbagger mit den Merkmalen des Oberbegriffs des Anspruchs 1.

Bei einem bekannten Längsbagger dieser Art (DE-B-2 324 058) ist die materialseitige Schiene oberhalb des Austragsbandes und etwa unter dem Anlenkpunkt des Baggerauslegers an einem Querträger abgestützt, der von einer das Materiallager wagenseitig begrenzenden Stützmauer in nahezu horizontaler Richtung absteht. Aufgrund dieser Anordnung belastet der Wagen diese Schiene überwiegend mit in Richtung seitlich zum Materiallager hin gerichteten Kräften. Dies erfordert eine teure und platzaufwendige Abstützkonstruktion der Stützmauer, welche zu Lasten des Materiallagerraumes geht.

Bei einem anderen bekannten Längsbagger dieser Art (DE-A-2 626 536) sind beide den Wagen tragende Schienen auf der vom Materiallager abgewandten Seite des Anlenkpunktes des Längsbaggers angeordnet. Dies führt zu einer hinsichtlich des Gesamtschwerpunktes des Baggers ungünstigen Abstützung, zu großem Platzbedarf und zu einer hohen Belastung sowohl der Schienen als auch der Räder des Wagens sowie der die Schiene tragenden Fundamente.

Der Erfindung liegt die Aufgabe zugrunde, diesen Schwierigkeiten abzuhelfen und eine verbesserte und kostengünstigere Abstützung für den Längsbagger zu schaffen.

Zur Lösung dieser Aufgabe dienen die Merkmale des Anspruchs 1.

Vorteilhafte Ausgestaltungen der Erfindung sind in den Unteransprüchen angegeben. Dabei ist die Ausgestaltung gemäß Unteranspruch 5 von besonderer Bedeutung.

Bei einem Längsbagger nach der Erfindung ist die materialseitige Schiene zwischen dem Anlenkpunkt und der Stützmauer des Materiallagers angeordnet. Die Abstützkräfte belasten die Schiene vertikal in Richtung auf den Untergrund, so daß die Stützmauer von der Abstützkraft des Wagens völlig entlastet ist und somit in Querrichtung gesehen schmal gehalten werden kann. Dies mindert die Kosten der Stützmauer bedeutend und vergrößert außerdem den Materiallagerraum.

Die materialseitige Schiene des Wagens ist in Richtung auf den Gesamtschwerpunkt der Anordnung aus Wagen und Baggerausleger hin verlagert. Dadurch verkleinert sich der Abstand zum Gesamtschwerpunkt des Längsbaggers. Dies führt zu einer Reduzierung der Raddrücke des Wagens und der Gegendruckkraft bzw. eines Ballastgewichtes sowie des Kippmomentes des Längsbaggers.

Bei der Erfindung ist das Austragsband hinter der materialseitigen Schiene, d.h. zwischen den beiden Schienen angeordnet. Dies und die Anordnung des oder der Querträger des Wagens, welche die Abstützkräfte auf die Räder und damit die Schienen übertragen, oberhalb des Austragsbandes ermöglicht, eine Standardbandkonstruktion einzusetzen, die unmittelbar auf dem Untergrund unabhängig von der Stützwand des Materiallagers abgestützt werden kann.

Dies ist ein entscheidender Vorteil gegenüber einer Konstruktion, bei dem der oder die Querträger des Wagens unterhalb des Austragsbandes verlaufen und bei dem das Austragsband folglich fliegend an der Stützwand zu befestigen ist, was überdies eine Spezialkonstruktion mit extrem flachem Band, d.h. geringer Bandmuldung erfordert.

Ein weiterer Vorteil eines Längsbaggers nach der Erfindung besteht darin, daß sich das Austragsband nicht oberhalb der materialseitigen Schiene sondern seitlich davon befindet. Dies verhindert, daß die Schiene mit vom Untergurt des Austragsbandes abfallenden Material verschmutzt werden kann. Außerdem läßt sich solches Material leichter unter dem Austragsband entfernen.

Ein weiterer Vorteil der Anordnung nach der Erfindung besteht darin, daß eine große Bandmuldung möglich ist. Eine solche Bandmuldung gewährleistet eine saubere Materialaufgabe ohne die Gefahr der Verschmutzung durch seitlich überquellendes Material. Ferner ist eine gute Bandführung von unten ohne verschleißanfällige seitliche Band- und Materialführungen gegeben.

Die Anordnung des Austragsbandes seitlich der materialseitigen Schiene erlaubt den Einsatz von Laufrädern des Wagens mit großem Durchmesser (in der Praxis beispielsweise 500 mm) was zur wesentlich kleineren Flächenpressungen und damit erheblich geringerem Verschleiß an Rad und Schiene führt.

Außerdem ergibt sich eine optimale Kraftübertragung der im Baggerbetrieb entstehenden horizontalen und vertikalen dynamischen Kräfte im Zusammenwirken mit zusätzlich vorsehbaren, seitlich am Schienenkopf angreifenden Führungsrollen, die im Durchmesser sehr groß und hinsichtlich der Lagerung sehr stabil dimensioniert sein können.

Die Erfindung ist im folgenden anhand schematischer Zeichnungen am Stand der Technik und an einem Ausführungsbeispiel mit weiteren Einzelheiten näher erläutert.

Es zeigen:
- Fig. 1: eine Schnittdarstellung durch ein Gebäude mit Materiallager und einem Längsbagger gemäß dem Stand der Technik;
- Fig. 2: in einer Darstellung wie Fig. 1 einen Längsbagger nach der Erfindung.

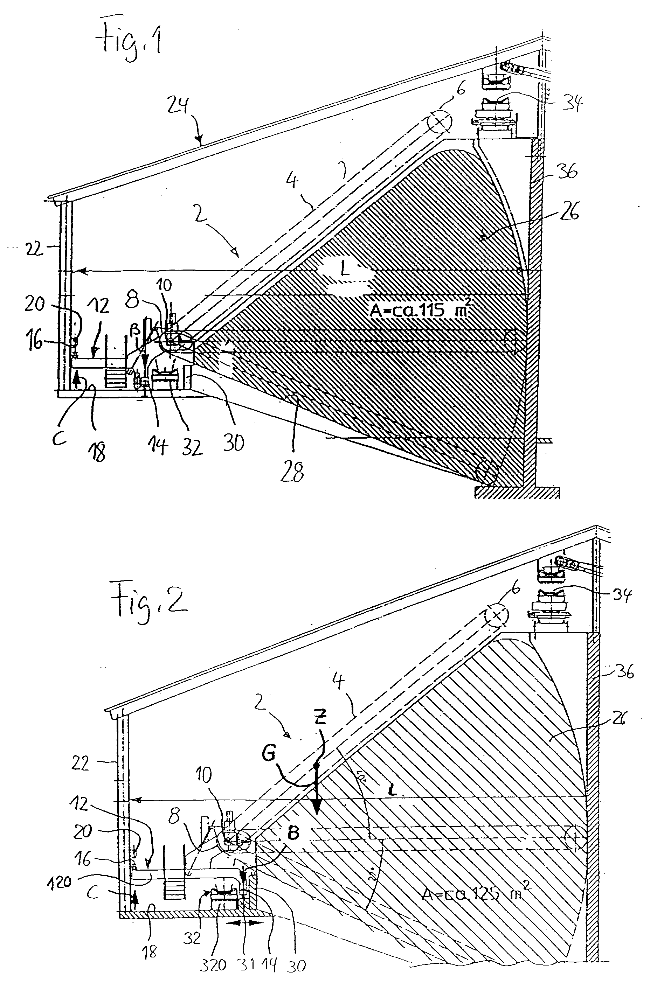

In den Figuren 1 und 2 sind gleiche oder gleichwirkende Teile mit gleichen Bezugszeichen bezeichnet.

Ein insgesamt mit der Bezugszahl 2 bezeichneter Längsbagger 2 umfaßt einen Baggerausleger 4 mit einer endlosen Kette, die über Kettenräder 6, 8 umläuft und nicht gezeigte Baggereimer oder -schaufeln trägt. Der Baggerausleger 4 ist mit seinem Abgabeende beim Kettenrad 8 an einem Anlenkpunkt 10 in einer vertikalen Ebene schwenkbar an einem Wagen 12 angelenkt. Dieser Wagen ist über zwei Schienen 14, 16 abgestützt, und zwar über die als Hauptfahrschiene fungierende Schiene 14 vertikal von oben auf dem Untergrund 18 und über eine Stützschiene 16 von unten gegen einen seitlichen Gegendruckträger 20 an der Wand 22 eines insgesamt mit dem Bezugszeichen 24 bezeichneten Gebäudes.

Der Baggerausleger 4 erstreckt sich oberhalb einer Materialansammlung 26, zum Beispiel von Ton, in einem Materiallager 28, dessen Rand schienenseitig durch eine Stützmauer 30 begrenzt ist. Gemäß Fig. 1 ist der Stützmauer 30 und der Hauptfahrschiene 14 parallel ein Austragsband 32 auf dem Untergrund 18 abgestützt, das unterhalb dem unteren Abgabeende (bei 8) des Baggerauslegers so angeordnet ist, daß sich die Baggereimer auf dieses Austragsband entleeren und abgebaggertes Gut über das Austragsband weggefördert werden können.

Aus den Figuren 1 und 2 ist ersichtlich, daß eine in dem Materiallager 28 aufnehmbare Materialmenge 26 im Querschnittsflächenbereich A zwischen Winkeln von maximal etwa +40° und etwa -27°, maximal -40°, gegenüber der Horizontalen liegen kann. Bei 34 ist ein Austragsband dargestellt, über welches das Materiallager mit Material beschickbar ist.

Mit den Pfeilen B und C sind die Abstützkräfte bezeichnet, wobei die Abstützkraft des Wagens 12 auf die Hauptfahrschiene 14 vertikal nach unten gerichtet und im Falle der Fig. 1 um mehr als 1/3 größer als die vertikal nach oben gerichtete Abstützkraft C auf die Stützschiene 16 ist. Die Materialmenge ist proportional zum Materialquerschnitt A und bei der Ausführung nach Fig. 1 mit 115 m² angegeben. Die lichte Weite L zwischen dem durch eine Wand 36 begrenzten rechten Rand des Materiallagers 28 und der Wand 22 beträgt etwa 19 m.

Dieses Maß gilt etwa auch für die lichte Weite L des Gebäudes bei der erfindungsgemäßen Ausführung des Längsbaggers 2 gemäß Fig. 2. Unterschiedlich ist hier, daß der Wagen 12 materialseitig auf der Hauptfahrschiene 14 am Untergrund 18 auf einen Sockel 31 abgestützt ist, der in Richtung quer zur Fahrtrichtung des Wagens 12 gesehen zwischen dem Anlenkpunkt 10 des unteren Abgabeendes (beim Kettenrad 8) des Baggerauslegers 4 und der das Materiallager 28 begrenzenden Stützmauer 30 liegt. Alternativ kann die Hauptfahrschiene 14 anstatt auf dem Sockel unmittelbar am Untergrund abgestützt sein. Die Schiene 14 liegt dabei etwas tiefer als das Austragsband 32. Das Austragsband 32 ist bei der erfindungsgemäßen Konstruktion nach Fig. 2 zwischen den Schienen 14, 16 am Untergrund 18 über eine Stützkonstruktion 320 abgestützt. Die Abstützkraft des Wagens auf die Schiene 14 wird dabei vertikal nach unten in den Untergrund eingeleitet, so daß es abgesehen von einer üblichen Fundamentierung oder Bodenplatte keiner besonderen Abstützmaßnahmen bedarf. Die Stützmauer 30 hat keinerlei Abstützkräfte des Wagens 12 aufzunehmen, so daß die Stützmauer 30 lediglich zur seitlichen Zurückhaltung des Materials dimensioniert zu werden braucht und keinen Raum des Materiallagers 28 selbst in Anspruch nimmt.

Im Vergleich zum Stand der Technik nach Fig. 1 sind die Abstützkräfte C, B bei der erfindungsgemäßen Ausführung nach Fig. 2 unter der Vorraussetzung gleichen Wagen- und Baggergewichtes erheblich verkleinert, im Falle der Hauptfahrschiene 14 um etwa den Faktor 0,75 und im Falle der Stützschiene 16 um etwa den Faktor 0,60. Dies führt zu einer entsprechend geringeren Belastung der Schienen und der Räder des Wagens 10, die ebenso wie die Fahrantriebe entsprechend schwächer ausgebildet werden können. Aufgrund der Verlagerung der Schiene 14 in Richtung des Materiallagers 28 ist die Abstützung näher an den Gesamtschwerpunkt Z des Längsbaggers herangerückt, in dem das Gesamtgewicht G angreift, was das durch den Baggerausleger 4 erzeugte Kippmoment verringert.

Die Figur 2 zeigt, daß der im Materiallager 28 bei der Konstruktion gemäß der Erfindung erzielbare Materialquerschnitt A ca. 125 m² beträgt. Mit anderen Worten ist die im Materiallager 28 bei der Erfindung unterbringbare Materialmenge 26 bei etwa gleichen Gebäudeabmessungen deutlich größer als die Materialmenge nach dem Stand der Technik gemäß Fig. 1. Dies ermöglicht einer bessere Gebäudeausnutzung oder - bei Vorgabe einer gewünschten maximalen Materialmenge des Materiallagers - ein kleineres Gebäude.

Gemäß Figur 2 weist der Wagen 12 mindestens einen, den Abstand zwischen den beiden Schienen 14, 16 überbrückenden Querträger 120 auf, über welchen die im Betrieb entstehenden Baggerkräfte in überwiegend vertikaler Richtung auf die Schienen übertragen werden. Wichtig ist dabei, daß dieser Querträger 120 oberhalb des Austragsbandes 32 verläuft bzw. dieses übergreift. Somit ist das Austragsband 32 über eine Stützkonstruktion 320 in einfacher Weise verläßlich am Untergrund 18 abstützbar. Dies wäre nicht möglich, wenn das Austragsband 32 wie bei einer kürzlich vorgeschlagenen anderen Konstruktion oberhalb des Querträgers 120 angeordnet wäre. Dann müßte das Austragsband einseitig "fliegend" an der Stützmauer 30 gehaltert werden, was teuer und hinsichtlich der Abstützung und möglicher Schwingungen im Betrieb labil wäre.

## Patentansprüche

1. Längsbagger, der einen mit seinem unteren Abgabeende über einen Anlenkpunkt (10) an einem Wagen (12) schwenkbar angelenkten Baggerausleger (4) mit daran beweglich angebrachten Baggermitteln aufweist, wobei der Wagen auf zwei entlang einem Materiallager (28) für zu baggerndes Gut angeordneten Schienen (14, 16) verfahrbar ist und der Anlenkpunkt (10) des Baggerauslegers (4) oberhalb eines parallel zu den Schienen (14, 16) angeordneten Austragsbandes (32) liegt, dadurch **gekennzeichnet,** daß die materialseitige Schiene (14) in Richtung quer zur Fahrtrichtung des Wagens (12) gesehen zwischen dem Anlenkpunkt (10) und einer das Materiallager (28) begrenzenden Stützwand (30) tiefer als oder höchstens auf gleichem Niveau wie das Austragsband (32) angeordnet ist und mindestens überwiegend vertikal durch den Wagen belastet (12) ist.

2. Längsbagger nach Anspruch 1,
dadurch **gekennzeichnet,** daß die vom Material (26) fernliegende Schiene (16) jenseits des Austragsbandes (32) an einer gebäudefesten Wand (22) oder am Boden eines Lagergebäudes (24) abgestützt ist, wobei das Kippmoment durch einen Ballast auf dem Wagen (12) kompensiert ist.

3. Längsbagger nach Anspruch 2,
dadurch **gekennzeichnet,** daß der Wagen (12) an der vom Material fernliegenden Schiene (16) von unten abgestützt ist.

4. Längsbagger nach einem der Ansprüche 1 bis 3,
dadurch **gekennzeichnet,** daß die materialseitige Schiene (14) auf einem Sockel (31) zwischen der Stützkonstruktion des Austragsbandes (32) und der Stützwand (30) abgestützt ist.

5. Längsbagger nach einem der Ansprüche 1 bis 4,
dadurch **gekennzeichnet,** daß das Austragsband (32) über eine Stützkonstruktion (320) am Untergrund (18) abgestützt ist und daß der Wagen (12) mindestens einen die Kräfte des Längsbaggers auf die Schienen (14, 16) übertragenden Querträger (120) aufweist, der den Abstand zwischen den beiden Schienen (14, 16) überbrückend oberhalb des Austragsbandes (32) verläuft.
